# EUROPEAN PATENT APPLICATION

(11) **EP 1 615 183 A1**
(43) Date of publication of application: **11.01.2006**
(21) Application number: 04076963.0
(22) Date of filing: 07.07.2004
(51) Int. Cl.: G07F 19/00

(54) **Internet payment verification method and system**

(71) Applicant: Streamboys B.V., 3812 RK Amersfoort (NL)
(72) Inventor: Hof, Marco Peter, 1216 JT Hilversum (NL)
(74) Representative: van Westenbrugge, Andries

(57) **Abstract**

Internet payment verification method and system, comprising a server computer (2) connectable to a computer network (8) and a communication channel (14). The server computer (2) is arranged for:
- executing a transaction with a customer using a computer device (6) also connectable to the computer network (8);
- sending a message to the computer device (6) with a verification code;
- receiving a communication code from the computer device (6), the communication code representing an address of a communication device (12);
- setting up the communication channel (14) with the communication device (12);
- receiving an identification code via the communication channel (14), which identification code is input by the customer in the communication device (12);
- comparing the received identification code and the verification code, and, if the received identification code and the verification code match, authorizing a payment of the transaction.

## Description

### Field of the invention

The present invention relates to an Internet payment verification method and system, for verifying payments for transactions on the Internet, or other computer networks. More in particular, the present invention relates to an Internet payment verification method, comprising executing a transaction on a server computer which is connected to a computer network, by a customer using a computer device also connected to the computer network, sending a message by the server computer to the computer device via the computer network, the message comprising a verification code. In a further aspect, the present invention relates to an Internet payment verification system, comprising a server computer connectable to a computer network, in which the server computer is arranged for executing a transaction with a customer using a computer device also connectable to the computer network, and sending a message to the computer device via the computer network, the message comprising a verification code. The message may comprise additional usage directions for the payment verification method, e.g. in the form of text or audio data.

### Prior art

Internet sales are growing as Internet becomes more and more popular. A much used method to pay a merchant for goods or services bought on an Internet site (such as fixed or limited time memberships) is using a credit card. However, to prevent fraud, the merchant has to implement a number of checks on the authenticity of the credit card used. Verification methods may include presenting a verification code to a user, which is scrambled or processed in a predetermined manner (e.g. using a hardware device), and verifying the resulting check code entered by the user. As a result of the strict tests (e.g. denying payment by credit card from certain countries) the merchant has to deny a lot of transactions to prevent possible fraud, and thus a lower sales total will result. Even so, the merchant will still be confronted with numerous cases of fraud, ranging from use of stolen credit card information (real fraud) to denial of a customer ever having paid for a certain service (friendly fraud).

### Summary of the invention

The present invention seeks to provide an Internet payment verification method and system which will allow the merchant to lower the frequency of fraud cases and to obtain a higher number of possible transaction completions.

According to the present invention, a method is provided according to the preamble defined above, in which the method further comprises receiving a communication code from the computer device, the communication code representing an address of a communication device (in the vicinity of the customer, such as a PSTN phone, a mobile phone, a VoIP phone, etc.), setting up a communication channel (or secondary channel) between the server computer and the communication device (e.g. using an interactive voice response system (IVR), receiving an identification code by the server computer via the communication channel, which identification code is input by the customer in the communication device, comparing the received identification code and the verification code, and, if the received identification code and the verification code match, authorizing a payment of the transaction. Otherwise the transaction will be declined. By using the secondary or communication channel and the communication device to obtain an identification code from the customer in response to the verification code, an additional check possibility is created. This will deter real fraud, as an additional communication device is needed which may provide identification or traceability of the customer planning real fraud. Also, it will lower the chance of friendly fraud, as the present method allows to obtain proof of a transaction.

In a further embodiment, the method further comprises receiving customer data by the server computer from the computer device, the customer data comprising received country data, comparing the received country data with country data derived from the communication code, and executing at least the step of comparing the received identification code and the verification code if and only if the received country data matches the derived country data. Country data may be derived from a number of data sources, such as the internet protocol (IP) address data of the computer device, credit card data (such as number), and location data which may be e.g. derived from address data input by the customer (via the regular computer network connection). To allow the transaction to go forward, all derived country data should point to the same country of origin.

An additional check is provided by a further embodiment of the present method, which further comprises receiving time zone data from the computing device by the server computer, comparing the received time zone data with time zone data derived from the received country data, and executing at least the step of comparing the received identification code and the verification code if and only if the received country data matches the received time zone data. Of course, other checks may also be implemented by the present method, such as a verification of entered address data (does that address actually exist, does the zip code match the address). Other fraud prevention methods may also be included, such as excluding customers having a non-traceable e-mail address, or originating from certain countries.

In an even further embodiment, in which the message further comprises transaction payment data (such as amount, repetition rate of payment, etc), the method further comprises receiving confirmation of the transaction payment data via the communication channel. This may be implemented e.g. by pressing a predetermined number on the communication device, or by voice recording. This provided further proof of the transaction and will further lower the chance of fraud.

All communication signals (such as data (e.g. DTMF signals), voice, etc.) on the communication channel may be recorded in an even further embodiment, to provide proof of the transaction. This is particularly advantageous for preventing friendly fraud, in which the customer denies ever having done a payment.

In a further aspect, the present invention relates to an Internet payment verification system as defined in the preamble above, in which the server computer is further connectable to a communication channel, and further arranged for receiving a communication code from the computer device, the communication code representing an address of a communication device, setting up the communication channel with the communication device, receiving an identification code via the communication channel, which identification code is input by the customer in the communication device, comparing the received identification code and the verification code, and, if the received identification code and the verification code match, authorizing a payment of the transaction. The Internet payment verification system according to the present invention provides advantages comparable to the advantages of the various method embodiments described above. Embodiments of the Internet payment verification system are described in the dependent claims.

In an even further aspect, the present invention relates to a computer program comprising computer executable code, which, when loaded on a computer system, provides the computer system with the ability to perform the method according to the present invention. The computer program may be provided on a computer program product, e.g. a carrier in the form of a CD-ROM or the like. This allows to sell the computer program to a merchant, enabling the merchant to execute the Internet payment verification method on its own computer system.

### Short description of drawings

The present invention will be discussed in more detail below, using a number of exemplary embodiments, with reference to the attached drawings, in which
Fig. 1 shows a schematic diagram of an Internet based payment system according to the prior art;
Fig. 2 shows a schematic diagram of an Internet based payment system according to a first embodiment of the present invention; and
Fig. 3 shows a schematic diagram of an Internet based payment system according to a further embodiment of the present invention.

### Detailed description of exemplary embodiments

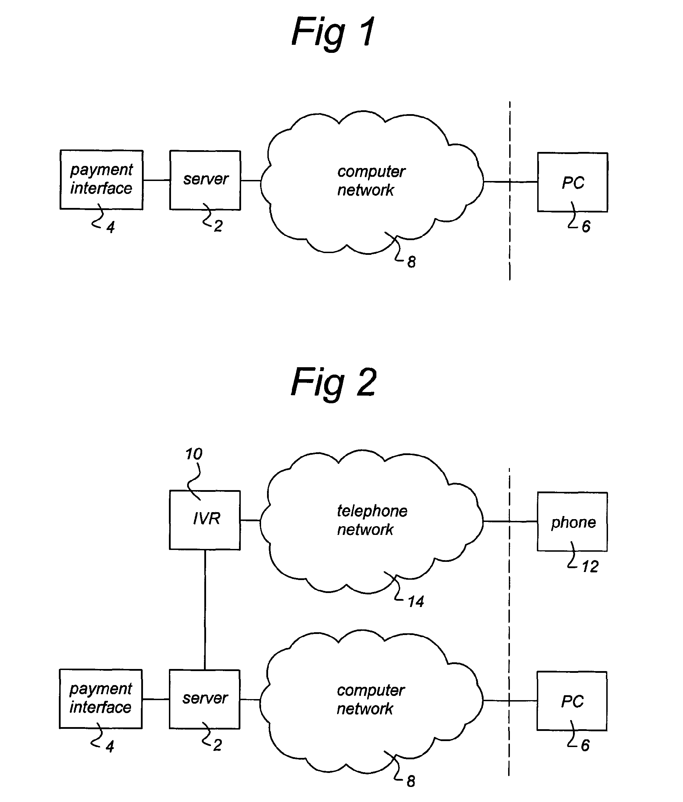

In present day payment systems, particularly Internet payment systems using credit cards, fraud is an important problem. In Fig. 1 a typical set-up of such a system is shown. A website of a merchant is hosted on a server 2 which is connected to a computer network 8, such as the Internet. This allows the server 2 to communicate with a computer device 6, such as a personal computer 6 of a customer wishing to buy goods or services from the website hosted on the server 2. A payment system 4 may be connected to the server 2 for interfacing with payment providers, such as credit card companies. The customer may enter payment information on the personal computer 6, which is then transmitted to the server 2 via the computer network 8. The website may comprise web pages or forms to prompt the customer for entering payment data.

Merchants exploiting websites in which goods or services are offered and which use credit cards to obtain payment for the goods or services, may be confronted with a number of different types of fraud. When a buyer disputes a credit card payment, the buyer may be refunded by the merchant. Also the credit card bank may issue a charge back. However, credit card companies only allow a very low percentage of charge backs (after which e.g. no more credit card payments are allowed), and for each charge back a fine must be paid by the merchant.

Real fraud is defined as a credit card payment in which a stolen credit card (or credit card data) is used. In a number of ways, credit card information may be obtained, e.g. using fake websites. When the legitimate owner of such a credit card receives his credit card statement, he will dispute the payment and claim for a charge back with the issuing bank.

Friendly fraud may also appear in payment systems. E.g. someone may sign up for a membership with a website, but later on denies ever doing that. This may be the case when someone signs up for a membership on an adult website, which is discovered by a partner. The membership owner may then deny ever taking the membership and claim his credit card was stolen. A charge back may result.

For certain types of services offered on the Internet, the friendly fraud may take up as much as 90% of all charge back frauds. Using the present invention, it is possible to reduce the above types of fraud drastically, which will result in a better chance of staying below the charge back limit, and reducing charge back costs for the merchant.

Already, merchants, especially Internet website merchants, use various types of checks in order to lower the risks of real or friendly fraud. Some exemplary checks are listed below:
- Three countries check: the website server 2 derives country information from the IP address of the computer 6 via which the customer is communicating with the website; credit card information entered by the customer is used to check from which country the customer originates; and from the credit card number, it is also possible to derive from which country the credit card originates. When the three countries do not match, the transaction is declined.
- Address Verification System: the address a customer enters on a website (or website form) is checked as to whether it actually exists. Also a check may be performed as to whether the zip code entered and the address match. However, such checks may be available for certain countries only.
- Time zone check: It is possible to obtain the time zone of the computer 6 via which the customer is communicating with the website server 2. This may be checked with the country information (e.g. using the three countries check above).

All these checks may also result in certain risk scores, and above a certain total risk score threshold, the transaction will be declined. This may be further enhanced using further risk scoring mechanisms, e.g. using an additional risk score when the customer uses an e-mail address from a free e-mail provider. Also, customers from certain countries may be completely blocked from performing transactions on a website. For a typical website, using all the above checks, a total of up to 80% of all transactions may be declined, which thus lowers the turn around of the website.

In order to lower the rate of fraud, and to allow more possible customers to pay for goods or services using credit card payments, the payment system according to the present invention may be used. Fig. 2 shows a first embodiment of a payment system according to the present invention. In Fig. 2, like reference numerals refer to similar components as depicted in Fig. 1.

In the payment system schematic as shown in Fig. 2, a second communication channel 14 is used to communicate with the customer. For this, an additional communication system 10 is connected to the website server 2. This additional communication system 10 allows communication with a communication device 12 in the possession of the customer via a second communication channel 14. In a particular advantageous embodiment, the additional communication system 10 is an interactive voice response system, which is able to communicate with a phone 12 (fixed phone or mobile phone) of a customer using a telephone network 14 (e.g. PSTN).

The website server 2 may be programmed to perform the following steps in the payment process. The customer will be asked, as usual, to fill in his name, address and credit card details. A fraud check as described above (e.g. the three country check) may be used to allow or to decline the transaction. When the fraud check indicates a high risk score, which normally would result in the transaction to be declined, it is now possible to start an additional verification step. The server 2 will then display on the website page shown on the personal computer 6 (using the computer network 8, or primary communication channel) a message indicating that the transaction may still be allowed, when the customer allows an additional check.

E.g., the website page may display a verification code and an entry field, in which the customer has to enter the phone number associated with his phone 12. If the customer enters his phone number, this data will be received by the server 2. The server 2 then optionally checks whether the country code of the phone number matches the country data already obtained.

Furthermore, the server 2 controls the additional communication system 10 to set up a connection with the phone 12. Using this secondary communication channel, the customer may be asked to enter on his phone 12 the verification code presented to him on the screen of the personal computer 6 as an identification. Only when the identification code entered by the customer and received by the server 2 via the secondary communication channel 14 matches the verification code, the transaction will be allowed.

Additional interaction between server 2 and personal computer 6 or between server 2 and phone 12 may be implemented for further fraud prevention. For example, the monetary value of the transaction can be presented to the customer using the interactive voice response system 10, with the question to acknowledge the amount, e.g. by pressing '1' on the phone 12. Alternatively, the customer may be requested to enter the amount on his phone 12. Also, a further message may be played that the customer is going to be billed and that the payment will be shown on his credit card statement with a predetermined name, which the customer needs to acknowledge, e.g. again by pressing '1' on his phone 12. This may also be executed when the transaction is a subscription which involves a recurring payment. For even more security, the communication using the interactive voice response system 10 may be recorded and archived (using e.g. audio files). All these measures will result in a very high reduction of fraud, as malignant customers will probably break off the transaction at some stage. Also, friendly fraud may be prevented as evidence of the transaction is stored. To prevent real fraud, the server 2 will stop the transaction when the phone number entered is from a country which is known to have a high number of credit card thefts or the like.

The payment system according to the present invention has a further advantage that the phone number of the customer is known and stored. In the case a customer asks for a charge back, and this is notified to the merchant by the credit card company, the customer may be contacted directly (e.g. using the interactive voice response system 10), and offered a refund in order to have the charge back cancelled.

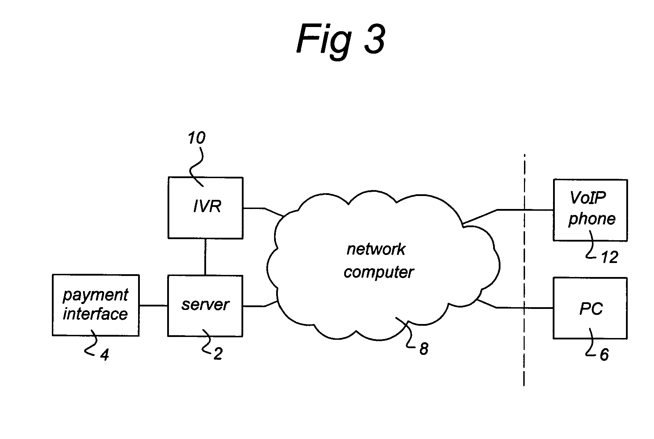

The present invention has been described using an exemplary embodiment having various optional elements. The present invention is however not limited to the embodiment described, but by the claims as appended to this description. E.g. the secondary communication channel 14 may in fact also be using the computer network or Internet 8 when implemented as a Voice over Internet Protocol (VoIP) communication, e.g. using a VoIP phone 12, as depicted in Fig. 3. Also, the various hardware elements shown in the embodiments of Fig. 2 and 3 on the merchant side of the system (server 2, payment interface 4, additional communication system 10) may be implemented using a single computer, in which the functionality of these elements is combined using appropriate software programs.

## Claims

1. Internet payment verification method, comprising:
- executing a transaction on a server computer (2) which is connected to a computer network (8), by a customer using a computer device (6) also connected to the computer network (8);
- sending a message by the server computer (2) to the computer device (6) via the computer network (8), the message comprising a verification code;
**characterized by**:
- receiving a communication code from the computer device (6), the communication code representing an address of a communication device (12);
- setting up a communication channel (14) between the server computer (2) and the communication device (12);
- receiving an identification code by the server computer (2) via the communication channel (14), which identification code is input by the customer in the communication device (12);
- comparing the received identification code and the verification code, and, if the received identification code and the verification code match, authorizing a payment of the transaction.

2. Internet payment verification method according to claim 1, further comprising:
- receiving customer data by the server computer (2) from the computer device (6), the customer data comprising received country data;
- comparing the received country data with country data derived from the communication code, and executing at least the step of comparing the received identification code and the verification code if and only if the received country data matches the derived country data.

3. Internet payment verification method according to claim 2, further comprising:
- receiving time zone data from the computing device (6) by the server computer (2);
- comparing the received time zone data with time zone data derived from the received country data, and executing at least the step of comparing the received identification code and the verification code if and only if the received country data matches the received time zone data.

4. Internet payment verification method according to one of the proceeding claims, in which the message further comprises transaction payment data, and receiving confirmation of the transaction payment data via the communication channel (14).

5. Internet payment verification method according to one of the proceeding claims, further comprising recording communication signals on the communication channel (14).

6. Internet payment verification system, comprising a server computer (2) connectable to a computer network (8), in which the server computer (2) is arranged for:
- executing a transaction with a customer using a computer device (6) also connectable to the computer network (8);
- sending a message to the computer device (6) via the computer network (8), the message comprising a verification code;
**characterized in that** the server computer (2) is further connectable to a communication channel (14), and further arranged for:
- receiving a communication code from the computer device (6), the communication code representing an address of a communication device (12);
- setting up the communication channel (14) with the communication device (12);
- receiving an identification code via the communication channel (14), which identification code is input by the customer in the communication device (12);
- comparing the received identification code and the verification code, and, if the received identification code and the verification code match, authorizing a payment of the transaction.

7. Internet payment verification system according to claim 6, in which the server computer (2) is further arranged for:
- receiving customer data from the computer device (6), the customer data comprising received country data;
- comparing the received country data with country data derived from the communication code, and executing at least the step of comparing the received identification code and the verification code if and only if the received country data matches the derived country data.

8. Internet payment verification system according to claim 7, in which the server computer is further arranged for:
- receiving time zone data from the computing device (6);
- comparing the received time zone data with time zone data derived from the received country data, and executing at least the step of comparing the received identification code and the verification code if and only if the received country data matches the received time zone data.

9. Internet payment verification system according to one of the claims 6, 7 or 8, in which the message further comprises transaction payment data and in which the server computer (2) is further arranged for receiving confirmation of the transaction payment data via the communication channel (14).

10. Internet payment verification system according to one of the proceeding claims, in which the server computer (2) is further arranged for recording communication signals on the communication channel (14).

11. Computer program comprising computer executable code, which, when loaded on a computer system, provides the computer system with the ability to perform the method according to one of the claims 1 through 5.

12. Computer program product comprising a computer program according to claim 11.
